# EUROPEAN PATENT APPLICATION

(11) **EP 0 936 097 A1**
(43) Date of publication of application: **18.08.1999**
(21) Application number: 98400373.1
(22) Date of filing: 17.02.1998
(51) Int. Cl.: B60K 15/035

(54) **A device for recovering fuel vapor in a fuel tank, and methods of using such a device**

(71) Applicant: IMRA EUROPE S.A., F-06560 Valbonne (FR)
(72) Inventor: Boye, Anne Catherine, 11100 Narbonne (FR); Nagino, Masashi, 06110 Le Cannet (FR)
(74) Representative: Leszczynski, André

(57) **Abstract**

This invention relates to a device for recovering fuel vapor in a fuel tank, in particular of a motor vehicle, the device comprising:
. a filter (5) suitable for adsorbing gaseous fuel, the filter having two orifices (4,15) situated at opposite ends of a filter body (5a) ; and
. a condenser (8) suitable for condensing the gaseous fuel, the condenser comprising a condensation portion (8a) designed to contain gases, and a recovery portion (8b) designed to contain liquids, the condensation portion being connected to the filter via a transfer duct (6), and the recovery portion being connected to the tank via a return duct (9);

It includes:
. two three-way distributor valves (3,14) each installed on a respective orifice of the filter, these two distributor valves being suitable, in a first or 〈〈 adsorption 〉〉 position for putting one of the orifices of the filter into communication with a collection duct for collecting gases and opening out into the tank (1) above the level of liquid fuel, with the other orifice of the filter being put into communication with the outside, and in a second or 〈〈 desorption 〉〉 position, for putting one of the orifices of the filter into communication with the transfer duct (6) and the other orifice of the filter into communication with a circulation duct (13) opening out into the portion of the condenser that is designed to contain gas ; and
   a pump (7) installed on the transfer duct to dirve the desorbed gaseous fuel towards the condenser when the distributor valves are in the desorption position..

## Description

The present invention relates to a device for recovering fuel vapor in a fuel tank, in particular of a motor vehicle, and also to methods of using such a device.

NISSAN MOTOR CO LTD's European patent application published under No. 0 213 260 discloses a device for recovering fuel vapor generated in a motor vehicle fuel tank.

Such a device comprises a condenser connected to the tank by a collection duct which opens out into the tank above the level of liquid fuel.

The collection tank opens out at its other end in a condenser, which is kept permanently cool so that the fuel vapor recovered by the collection duct condenses on the inside walls of the condenser.

A fuel return duct enables the fuel condensed in the condenser to be returned to the tank.

In that prior art device, an activated carbon filter is also connected to the condenser to use adsorption for filtering the small quantities of gaseous fuel that escape condensation.

In conventional manner, the filter is itself connected to the circuit for feeding the engine of the vehicle with fuel in order to enable the gas adsorbed in the filter to be regenerated, also referred to as "desorption", given that the feed circuit sets up suction which causes air to flow through the filter.

In such a device, it is necessary to supply energy continuously for cooling the condenser, and that is a drawback when it is desired to recover fuel vapor that is generated while the vehicle engine is stopped.

Consequently, such a device can be used for evaporation emissions when the engine runs but not when the tank of the car is refueled, the engine being stopped.

Also, desorption of the fuel retained in the filter is caused by the suction that obtains in the fuel intake circuit of the engine, and that disturbs operation of the engine since the air/fuel ratio of the intake mixture is subject to continuous variation by the varying contribution of fuel desorbed from the filter.

The present invention seeks to solve those drawbacks.

The present invention provides a device for recovering fuel vapor in a fuel tank, in particular of a motor vehicle, the device comprising:
- a filter suitable for adsorbing gaseous fuel, the filter having two orifices situated at opposite ends of a filter body; and
- a condenser suitable for condensing the gaseous fuel, the condenser comprising a condensation portion designed to contain gases, and a recovery portion designed to contain liquids, the condensation portion being connected to the filter via a transfer duct, and the recovery portion being connected to the tank via a return duct;
   the device being characterized by the fact that it includes:
- two three-way distributor valves each installed on a respective orifice of the filter, these three-way distributor valves being suitable, in a first or "adsorption" position for putting one of the orifices of the filter into communication with a collection duct for collecting gases and opening out into the tank above the level of liquid fuel, with the other orifice of the filter being put into communication with the external atmosphere, and in a second or "desorption" position, for putting one of the orifices of the filter into communication with the transfer duct and the other orifice of the filter into communication with a circulation duct opening out into the portion of the condenser that is designed to contain gas; and
   a pump installed on the transfer duct to drive the desorbed gaseous fuel towards the condenser when the distributor valves are in the desorption position.

In the device of the invention, the filter is no longer used, as in the prior art, for the purpose of adsorbing residual quantities of gaseous fuel, but it is used as a storage buffer through which there passes all of the gaseous fuel collected in the tank.

Thus, the fuel vapor recovery device of the invention can perform its function under all circumstances, even when the vehicle engine is stopped, e.g. while the tank is being filled.

In addition, because of the transfer duct and of the circulation duct, the gaseous fuel desorbed by the filter is no longer delivered to the engine via the engine's fuel intake circuit, but it is condensed in the condenser and then returned to the fuel tank.

Another advantage of the device of the invention consists in the fact that the recirculation of fuel vapor occurs in a semi-closed system, whithout any risk of leaks outside the device in the external atmosphere. In other words, the only way fuel can leave the tank is through the usual alimentation of the engine, even for fuel that has been evaporated and recycled by condensation before it is consumed.

In a first embodiment of the invention, one of the orifices of the filter, referred to as the "first orifice", serves firstly to receive a mixture of air and of gaseous fuel for adsorption of the gaseous fuel and secondly to deliver said gaseous fuel during desorption thereof, and the other orifice of the filter, referred to as the "second orifice", serves firstly to deliver air cleared of gaseous fuel during adsorption and secondly to receive air for desorption.

In a second embodiment of the invention, the first orifice of the filter serves firstly to receive a mixture of air and of gaseous fuel for adsorption of the gaseous fuel, and secondly to receive air for desorption, and the second orifice of the filter serves firstly to deliver air cleared of gaseous fuel during adsorption and secondly to deliver gaseous fuel during desorption.

The transfer duct is thus connected to the second orifice of the filter and the circulation duct is connected to the first orifice of the filter, with the filter body having gas flows passing through it in the same direction both during adsorption and during desorption.

In a particular embodiment of the invention, the device includes, on the circulation duct a membrane suitable for separating in the mixture coming from the condensation portion of the condenser, firstly the air which remains in the circulation duct and secondly the gaseous fuel which is sent to a recycling duct opening out into the transfer duct upstream from the pump.

Thus, the residual quantities of fuel that escape condensation during a first pass through the condenser are separated from the air which is returned to the filter for desorption, and they are recycled in the condenser until they have been completely condensed.

In a variant, the recycling duct opens out into the transfer duct not upstream from the pump but downstream therefrom, a second pump being provided on the recycling duct to suck in gaseous fuel coming from the separation membrane.

In this way, an increased pressure difference is applied across the separation membrane, thereby improving the efficiency thereof.

It is known that a membrane of this type operates best when there is a pressure difference of about five atmospheres across it, whereas fuel desorption in the filter is preferably performed at a pressure of about one atmosphere. It is therefore preferable to use two separate pumps.

In a preferred embodiment of the invention, a constriction is provided on the circulation duct to reduce the pressure in the circulation duct and to enable the pressure in the condenser to be kept high, thereby enabling the condenser to perform its condensation function due to the pressure increase generated in this way.

Naturally, the consideration of the gaseous fuel can be improved or only carried out by cooling.

The filter of the device of the invention preferably contains activated carbon or any suitable absorbent for gazoline, in conventional manner.

In a preferred embodiment of the invention, the device includes means for heating the filter, so as to optimize its desorption efficiency by keeping the filter at a temperature of about 50°C to 80°C.

In a particular embodiment of the invention, the device includes two filters, and the distributor valves of the two filters are coupled in such a manner that when the distributor valves of the first filter are in the adsorption position, the distributor valves of the second filter are in the desorption position, and vice versa.

In such a device, one of the two filters is always ready to adsorb fuel vapor from the tank, while the other filter is in the process of desorbing previously collected fuel vapor.

In other words, this device is continuously able to adsorb fuel vapor.

The filter, or each filter when there is a plurality of filters, preferably includes a sensor suitable for measuring the concentration of adsorbed fuel or for detecting the fuel in excess, i.e. above an allowed emission threshold.

The present invention also provides a method of recovering fuel vapor generated in a tank, which method is characterized by the fact that it consists in using a device as described above and by performing the following steps:
- a) the distributor valves are put into the adsorption position during a first predetermined period of time; and
- b) the distributor valves are put into the desorption position, and the pump(s) is/are put into operation during a second predetermined period of time and steps a) and b) are performed as long as necessary.

According to the invention, such a method can be carried out when the tank is being refueled or when the car is parked, engine stopped, or when the motor runs and the car goes.

When the filter is provided with a sensor suitable for measuring the concentration of adsorbed fuel or for detecting the fuel in excess, i.e. above an allowed emission threshold, the following steps are performed:
- a) the distributor valves are put into the adsorption position;
- b) the sensor is consulted;
- c) when said sensor indicates an excess, the distributor valves are put into the desorption position, and the pump(s) is/are put into operation;
- d) when the concentration has returned to a minimum value or after a predetermined period of time, the pump(s) is/are stopped; and
- e) the method returns to step a).

When the device has two filters as described above, the following steps are performed:
- a) the distributor valves are put into the adsorption position;
- b) a predetermined time interval is allowed to elapse;
- c) the distributor valves are put into the desorption position;
- d) the pump(s) is/are put into operation;
- e) a predetermined time interval is allowed to elapse;
- f) the pump(s) is/are stopped; and
- g) the method returns to step a).

Finally, if both of the filters of the device are provided with respective sensors for sensing adsorbed fuel concentration or for detecting the fuel in excess, i.e.above an allowed emission threshold, then the following steps are performed:
- a) the distributor valves of the first filter are put into the adsorption position and those of the second filter are put into the desorption position;
- b) the pump(s) is/are put into operation during a predetermined time interval;
- c) the sensor of the first filter is consulted;
- d) as soon as said sensor indicates an excess, the distributor valves of the first filter are put into the desorption position and those of the second filter are put into the adsorption position;
- e) the pump(s) is/are put into operation during a predetermined time interval;
- f) the sensor of the second filter is consulted; and
- g) as soon as said sensor indicates an excess, the method starts again at step a).

To make the invention better understood, there follows a description of various embodiments given as non-limiting examples and described with reference to the accompanying drawings, in which:
- Figure 1 is diagrammatic view of a device constituting a first embodiment of the invention during a fuel adsorption stage;
- Figure 2 is a view analogous to Figure 1 showing the device during a desorption stage;
- Figures 3 and 4 are views analogous to Figures 1 and 2 showing a variant of the device;
- Figure 5 shows how the quantity of vapor present in the filter varies during adsorption/desorption cycles in the device of Figures 3 and 4;
- Figure 6 is a diagrammatic view of a device constituting a second embodiment of the invention during an adsorption stage;
- Figure 7 is a view analogous to Figure 6 showing the device during a desorption stage;
- Figures 8 and 9 are views analogous to Figures 5 and 6 for a variant of the device;
- Figure 10 shows how the quantity of fuel vapor present in the filter varies during adsorption/desorption cycles in the device of Figures 8 and 9;
- Figure 11 is a diagrammatic view of a device constituting a third embodiment of the invention, during a combined adsorption/desorption stage;
- Figure 12 is a view analogous to Figure 11 showing the device during the same combined adsorption/desorption stage; and
- Figure 13 is a graph showing how the quantities of fuel vapor present in the two filters of the device shown in Figures 11 and 12 vary.

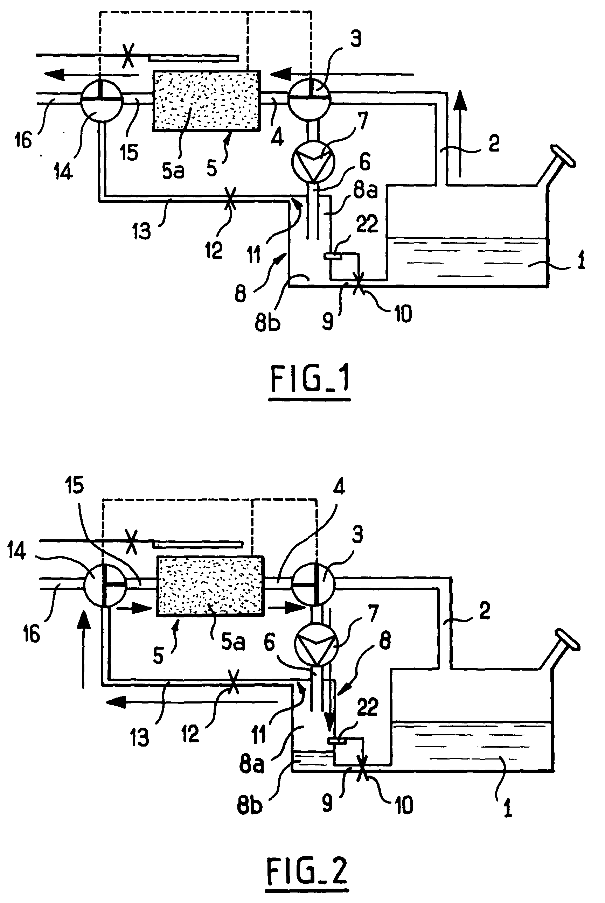

The device of Figures 1 and 2 comprises a fuel tank 1, a collection duct 2 opening out into the fuel tank above the level of the liquid and opening out at its other end into a three-way distributor valve 3 connected firstly to the first orifice 4 of a filter 5 and secondly to the end of a transfer duct 6.

The three-way distributor valve 3 is capable of taking up two positions, namely a first or "adsorption" position shown in Figure 1 in which it connects the collection duct 2 to the filter orifice 4, and a second or "desorption" position as shown in Figure 2 in which it connects said filter orifice 4 to the transfer duct 6.

A pump 7 is provided on the transfer duct 6 to suck in the mixture of air and fuel vapor from the filter 5 when the first distributor valve 3 in its desorption position.

The transfer duct 6 opens out into a condenser 8 which has a condensation, top portion 8a in which there are to be found the gases to be condensed, and a recovery, bottom portion 8b in which there is to be found the condensed liquid fuel.

A fuel return duct 9 is connected to the bottom of the recovery portion 8b and leads to the tank 1.

A control valve 10 connected to liquid level sensor 22 opens and closes the fuel return duct 9 according to the level detected in the condenser. As long as the liquid level is lower than said sensor 22, the return duct 9 remains closed and pressure keeps high in the condenser.

When the liquid level reaches the sensor, the control valve 10 opens the return duct and the condensed liquid fuel is forced into the tank 1 and then control valve 10 closes again the fuel return duct.

In addition, in its condensation portion 8a, the condenser includes an orifice 11 which is provided with a constriction 12 for limiting the rate at which air flows out from the condensation portion 8a of the condenser.

In this way, the pump 7 provided on the transfer duct 6 generates excess pressure in the condensation portion 8a of the condenser, thereby ensuring that the fuel condenses.

The air coming from the condenser 8 via the orifice 11 with the constriction 12 is delivered via a circulation duct 13 to a second three-way distributor valve 14 which is connected firstly to a second orifice 15 of the filter, and secondly to a duct 16 leading to the atmosphere.

The second distributor valve 14 may take a first or "adsorption" position as shown in Figure 1 in which it connects the second orifice 15 of the filter to ambient air via the duct 16, and a second or "desorption" position as shown in Figure 2 it connects the circulation duct 13 to the second orifice 15 of the filter.

In Figure 1, arrows show the path taken by fuel vapor leaving the tank 1, e.g. while it is being filled.

The collection duct 2 conveys the fuel vapor mixed with air to the filter 5 and the mixture passes through the activated carbon 5a from which the filter is made.

As it passes through, the fuel is adsorbed on the activated carbon 5a and only fuel-free air reaches the second orifice 15 of the filter which is connected to the atmosphere.

Thus, the fuel vapor is trapped in the filter and only air that has been cleaned of the vapor can escape from the device via the duct 16.

When filling is over, both three-way distributor valves are put into the desorption position, as shown in Figure 2, and the pump 7 is put into operation.

The path followed by the mixture is shown by arrows in Figure 2.

The pump sucks in the mixture of air and fuel coming from the filter and delivers it to the condenser.

Because of the constriction 12, the pressure in the condenser rises, thereby causing the fuel to condense.

The air cleared of fuel passes through the orifice 11 of the condenser and returns to the second orifice 15 of the filter to continue fuel desorption.

Once desorption is complete, the valve 10 closing the fuel return duct 9 is opened and the pressure in the condenser expels the condensed fuel towards the tank.

Both three-way distributor valves are then put back into the adsorption position to collect fuel vapor again.

It can be seen that the invention makes it possible to desorb fuel without interfering with operation of the engine.

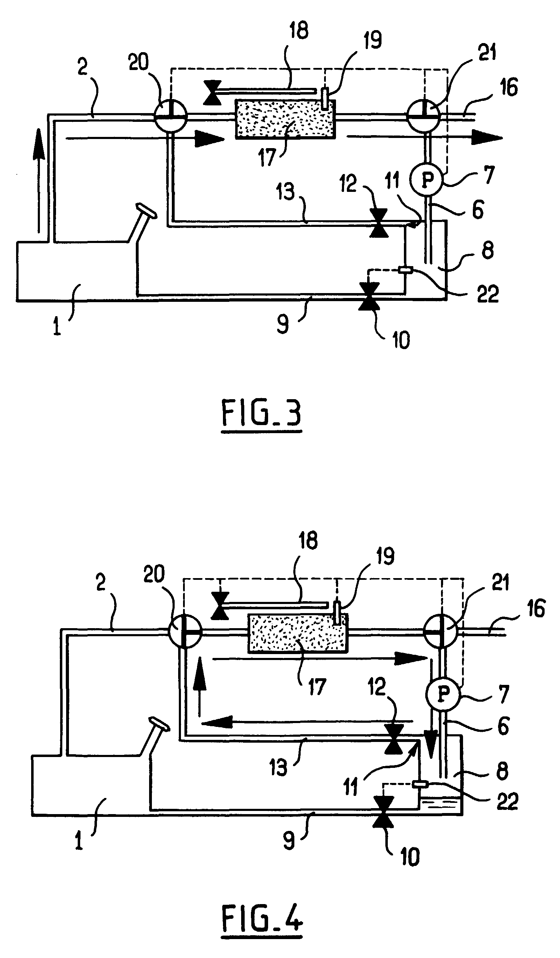

Figures 3 and 4 show a variant of the above-described device.

Elements identical to those described above are given the same reference numerals.

In this variant, the filter 17 is provided firstly with heater means 18, thereby improving the efficiency of the desorption processes, and secondly with a sensor 19 which detects the fuel in excess, i.e. above an allowed emission threshold.

Three-way distributor valves 20 and 21 are installed on the orifices of the filter, as before, however the first distributor valve 20 is connected to the collector duct 2 and to the circulation duct 13, while the second distributor valve 21 is connected to the duct 16 leading to the atmosphere, and to the transfer duct 6.

In this case, the filter body has gaseous flows passing through it in the same direction both during adsorption and during desorption.

The adsorption stage is shown in Figure 3 where arrows show the path followed by the gas flows coming from the tank 1.

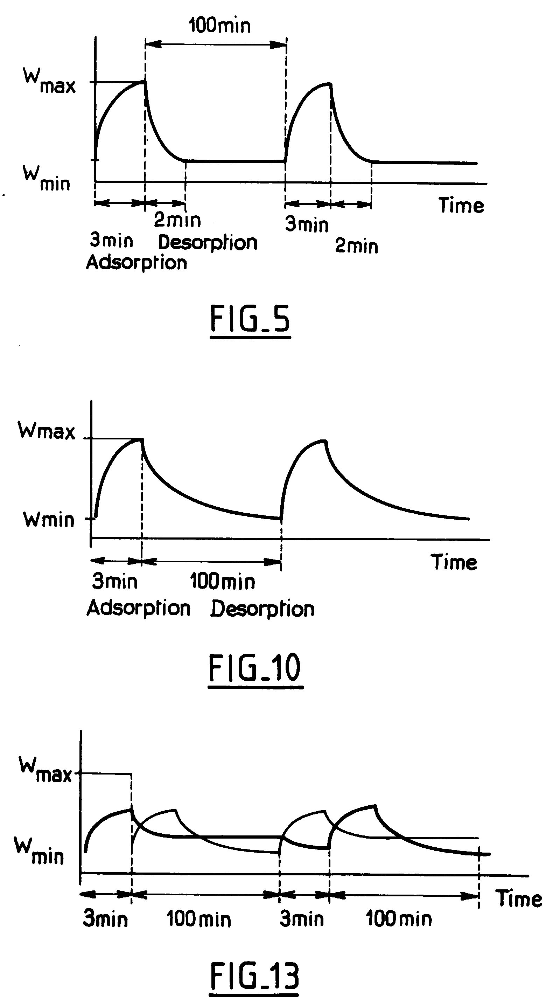

As can be seen in Figure 5, during this adsorption stage, the quantity of fuel present in the filter increases up to a maximum value Wₘₐₓ.

The sensor 19 then indicates that the filter 17 is near to saturation, and the desorption stage is engaged by switching the distributor valves 20 and 21 over to their desorption positions, and by switching on the pump 7.

As shown diagrammatically by dashed lines, the two distributor valves 20 and 21, the heater means 18, the sensor 19, and the pump 7 are controlled by a common controller (not shown).

The mixture continues to flow through the filter in the same direction, unlike the example of Figures 1 and 2, and the fuel is condensed in the condenser because of the gas circulation represented by arrows in Figure 4.

The quantity of fuel in the filter then decreases rapidly down to a minimum value Wₘᵢₙ, as can be seen in Figure 5.

The valve 10 which closes the fuel return duct 9 is not opened until the level of fuel condensed in the condenser reaches a certain depth as detected by a sensor 22 which controls the valve 10.

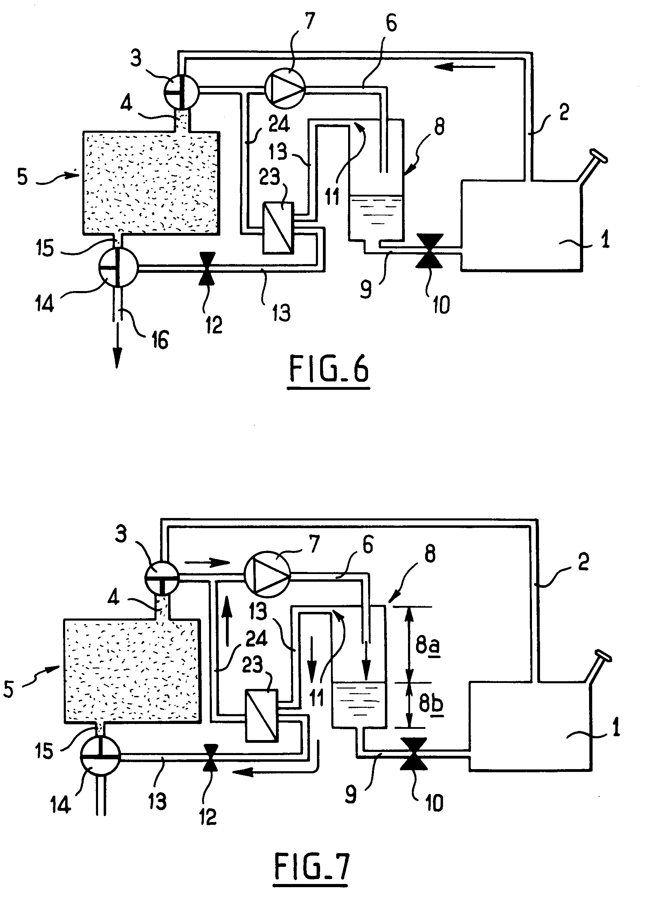

In the embodiment of Figures 6 and 7, there can be seen the same organization as shown in Figures 1 and 2.

The adsorption stage takes place as described with reference to Figures 1 and 2, however the desorption stage takes place as follows.

In this case, the circulation duct 13 is interrupted by a separation membrane serving to separate the residual quantities of fuel vapor from the condenser so as to send them via a recycling duct 24 into the transfer duct 6, while the air separated from the fuel vapor remains in the circulation duct 13 to be returned to the second orifice 15 of the filter.

The non-condensed gaseous fuel is thus recycled through the condenser.

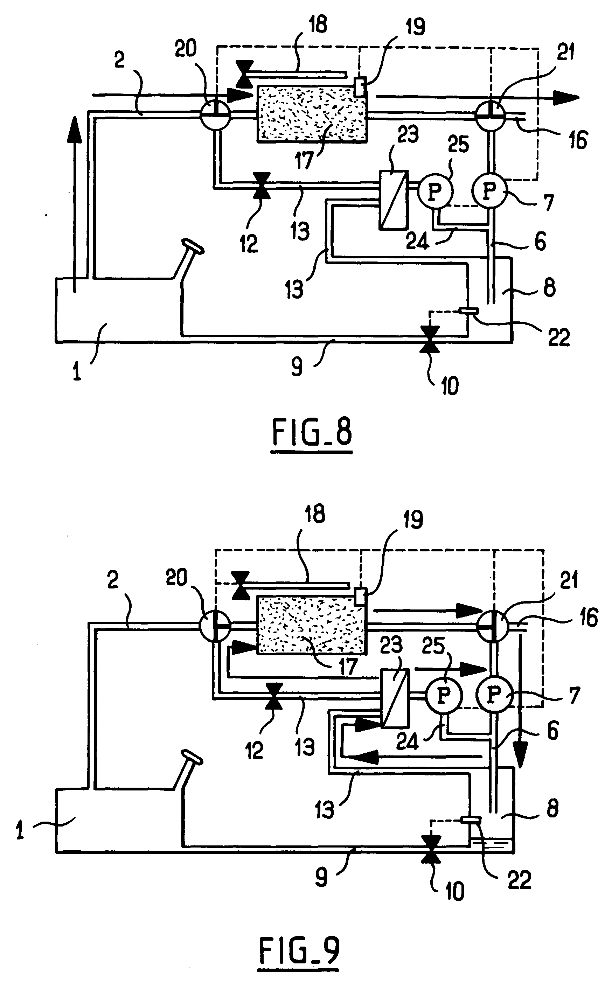

In the variant of Figures 8 and 9, there can be seen the same arrangement as in Figures 3 and 4, together with the addition, as above, of a separation membrane 23 in the recycling duct.

During adsorption, the fuel vapor passes through the filter and is adsorbed in the filter body, with air being exhausted to the atmosphere, as shown in Figure 8.

During desorption, the mixture continues to pass through the filter in the same direction.

Unlike the embodiment of Figures 6 and 7, the recycling duct 24 opens out into the transfer duct 6 downstream from the pump 7, and a second pump 25 is provided on the recycling duct to establish a greater pressure difference across the membrane 23.

Desorption takes place as shown in Figure 9, with the membrane the having increased efficiency compared with that of Figures 6 and 7 because it is subjected to a greater pressure difference.

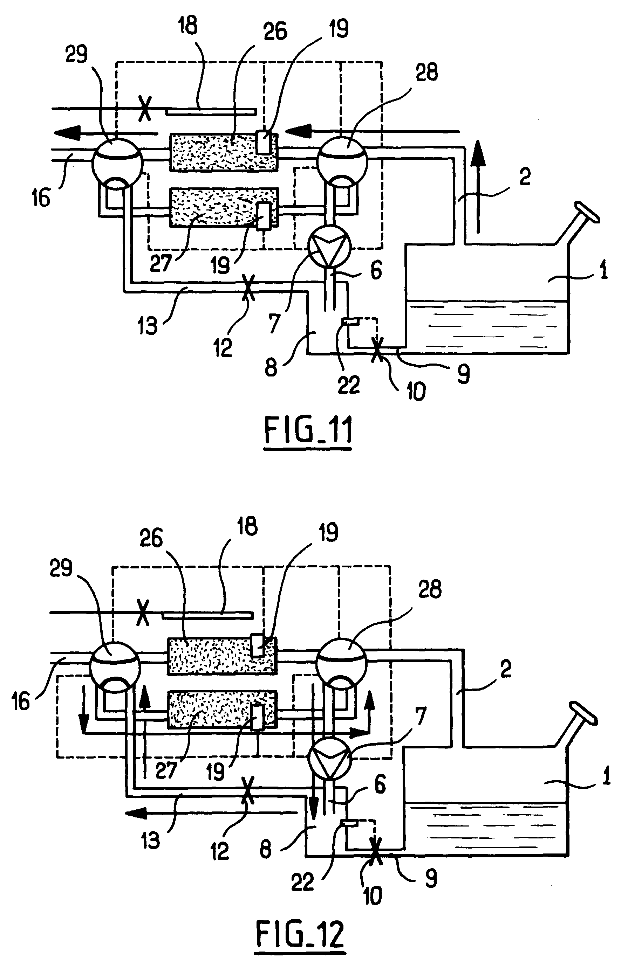

Figure 10 shows the curve for the quantity of fuel present in the filter during adsorption and desorption cycling.

In the embodiment of Figures 11 and 12, the device has two filters 26 and 27 whose orifices are connected to four-port distributor valves 28 and 29 which operate like a pair of three-port distributor valves coupled in such a manner that when the first filter is adsorbing fuel vapor, the second filter is desorbing fuel vapor.

This means that adsorption is always taking place in one or other of the filters (filter 27 in Figure 11) while desorption is always taking place in the other filter (filter 26 in Figure 11).

The two adsorption/desorption cycles that take place in the two filters operate with a small offset in time, as can be seen in Figure 13.

This device has the advantage of continuously recovering the fuel vapor generated in the tank.

Naturally, the above-described embodiments are not limiting in any way, and any desirable modifications could be made thereto without thereby going beyond the ambit of the invention.

## Claims

1. A device for recovering fuel vapor in a fuel tank, in particular of a motor vehicle, the device comprising:
• a filter (5, 17, 26, 27) suitable for adsorbing gaseous fuel, the filter having two orifices (4, 15) situated at opposite ends of a filter body (5a); and
• a condenser (8) suitable for condensing the gaseous fuel, the condenser comprising a condensation portion (8a) designed to contain gases, and a recovery portion (8b) designed to contain liquids, the condensation portion being connected to the filter via a transfer duct (6), and the recovery portion being connected to the tank via a return duct (9);
the device being characterized by the fact that it includes:
• two three-way distributor valves (3, 14, 20, 21, 28, 29) each installed on a respective orifice of the filter, these two distributor valves being suitable, in a first or "adsorption" position for putting one of the orifices of the filter into communication with a collection duct for collecting gases and opening out into the tank (1) above the level of liquid fuel, with the other orifice of the filter being put into communication with the outside, and in a second or "desorption" position, for putting one of the orifices of the filter into communication with the transfer duct (6) and the other orifice of the filter into communication with a circulation duct (13) opening out into the portion of the condenser that is designed to contain gas; and
a pump (7) installed on the transfer duct to drive the desorbed gaseous fuel towards the condenser when the distributor valves are in the desorption position.

2. A device according to claim 1, characterized by the fact that one of the orifices of the filter serves firstly to receive a mixture of air and of gaseous fuel for adsorption of the gaseous fuel and secondly to deliver said gaseous fuel during desorption thereof, and the other orifice of the filter serves firstly to deliver air cleared of gaseous fuel during adsorption and secondly to receive air for desorption.

3. A device according to claim 1, characterized by the fact that one of the orifices of the filter serves firstly to receive a mixture of air and of gaseous fuel for adsorption of the gaseous fuel, and secondly to receive air for desorption, and the other orifice of the filter serves firstly to deliver air cleared of gaseous fuel during adsorption and secondly to deliver gaseous fuel during desorption.

4. A device according to any one of claims 1 to 3, characterized by the fact that it includes, on the circulation duct (13) a membrane (23) suitable for separating in the mixture coming from the condensation portion (8a) of the condenser (8), firstly the air which remains in the circulation duct (13) and secondly the gaseous fuel which is sent to a recycling duct (24) opening out into the transfer duct (6) upstream from the pump (7).

5. A device according to any one of claims 1 to 3, characterized by the fact that it includes, on the circulation duct (13) a membrane (23) suitable for separating in the mixture coming from the condensation portion (8a) of the condenser (8) firstly the air which remains in the circulation duct (13) and secondly the gaseous fuel which is sent to a recycling duct (24) opening out into the transfer duct (6) downstream from the pump (7) and that it includes a second pump (25) on the recycling duct (24) for sucking in the gaseous fuel coming from the membrane (23).

6. A device according to any one of claims 1 to 5, characterized by the fact that it includes, on the circulation duct (13), a constriction (12) which reduces the pressure in said circulation duct and which enables pressure in the condenser (8) to be kept high, with the condenser then performing its function by virtue of the pressure increase generated in this way.

7. A device according to any one of claims 1 to 5, characterized by the fact that the condenser (8) condenses the gaseous fuel by cooling it.

8. A device according to any preceding claim, characterized by the fact that the filter (5) contains activated carbon (5a) or any suitable absorbent for gazoline.

9. A device according to any preceding claim, characterized by the fact that it includes heater means (18) for heating the filter to increase the performance thereof.

10. A device according to any preceding claim, characterized by the fact that it includes, in the filter, a sensor (19) suitable for measuring the concentration of adsorbed fuel or for detecting the fuel in excess, i.e. above an allowed emission threshold.

11. A device according to any preceding claim, characterized by the fact that it includes two filters (26, 27) and that the three-way distributor valves (28, 29) provided at the first and second orifices of the two filters are coupled in such a manner that when the distributor valves of the first filter are in the adsorption position the distributor valves of the second position are in the desorption position, and vice versa.

12. A method of recovering fuel vapor generated in a tank, the method being characterized by the fact that it consists in using a device according to any one of claims 1 to 11, by performing the following steps:
• a) the distributor valves are put into the adsorption position during a first predetermined period of time; and
• b) the distributor valves are put into the desorption position, and the pump(s) is/are put into operation after a second predetermined period of time, and steps a) and b) are performed as long as necessary.

13. A method of recovering fuel vapor in a fuel tank, characterized by the fact that it consists in using a device according to claim 10, and in performing the following steps:
• a) the distributor valves are put into the adsorption position;
• b) the sensor is consulted;
• c) when said sensor indicates an excess, the distributor valves are put into the desorption position, and the pump(s) is/are put into operation;
• d) when the concentration has returned to a minimum value or after a predetermined period of time, the pump(s) is/are stopped; and
• e) the method returns to step a).

14. A method of recovering fuel vapor in a fuel tank, characterized by the fact that it consists in using a device according to claim 11, by performing the following steps:
• a) the distributor valves are put into the adsorption position;
• b) a predetermined time interval is allowed to elapse;
• c) the distributor valves are put into the desorption position;
• d) the pump(s) is/are put into operation;
• e) a predetermined time interval is allowed to elapse;
• f) the pump(s) is/are stopped; and
• g) the method returns to step a).

15. A method of recovering fuel vapor in a fuel tank, characterized by the fact that it consists in using a device according to claims 10 and 11, by performing the following steps:
• a) the distributor valves of the first filter are put into the adsorption position and those of the second filter are put into the desorption position;
• b) the pump(s) is/are put into operation during a predetermined time interval;
• c) the sensor of the first filter is consulted;
• d) as soon as said sensor indicates an excess, the distributor valves of the first filter are put into the desorption position and those of the second filter are put into the adsorption position;
• e) the pump(s) is/are put into operation during a predetermined time interval;
• f) the sensor of the second filter is consulted; and
• g) as soon as said sensor indicates an excess, the method starts again at step a).
